# EUROPEAN PATENT SPECIFICATION

(11) **EP 2 767 156 B1**
(45) Date of publication and mention of the grant of the patent: **13.07.2016**
(21) Application number: 13155572.4
(22) Date of filing: 18.02.2013
(51) Int. Cl.: A01G 9/12

(54) **A METHOD TO CUT WIRES GROWN OVER WITH PLANTS IN A CROP WIRE HOISTING SYSTEM AND AN APPARATUS FOR APPLYING THE METHOD**
VERFAHREN ZUM SCHNEIDEN VON MIT PFLANZEN ÜBERWUCHERTEN DRÄHTEN IN EINEM ERNTEDRAHTUNTERBRINGUNGSSYSTEM UND VORRICHTUNG ZUM ANWENDEN DES VERFAHRENS
PROCÉDÉ POUR COUPER DES FILS ENTOURANT DES PLANTES DANS UN SYSTÈME DE LEVAGE DE FIL DE CULTURE ET APPAREIL PERMETTANT D'APPLIQUER CE PROCÉDÉ

(43) Date of publication of application: 20.08.2014
(73) Proprietor: Ruudva BVBA, 3640 Kinrooi Molenbeersel (BE)
(72) Inventor: Wiermans, Henricus Helena Maria, 6002 TP Weert (NL); Nies, Henricus Wilhelmus Gerardus Mattheüs, 6034 RA Nederweert-Eind (NL)
(74) Representative: Janssen, Paulus J. P.

(56) References cited:
- NL-C2- 1 028 170

## Description

### Field of the invention

The present invention pertains to a method to cut multiple separate wires that hang down from a support in a crop wire hoisting system, which system comprises as the support a hoistable cable that extends in essence horizontally and is suspended from a top framework by being connected to multiple interdistant suspenders that can be pulled in towards the top framework to allow hoisting of the cable, the multiple separate wires being connected to the cable at predetermined intervals and each grown over with a plant. The invention also pertains to an apparatus for applying the said method.

### Background art

During recent years the growing of utilitarian plants such as cucumber and tomato plants in green houses has evolved rapidly. Currently a state-of-the art growing method is the so-called crop wire hoisting system, such as for example available from Meteor Systems, Etten-Leur, The Netherlands. In this system a support cable is suspended from a top frame in a greenhouse. The cable extends in essence in horizontal direction, parallel to and above the gutters in which the crop plants grow. Connected to this support cable are multiple separate crop wires. Crop plants are intertwined or otherwise connected to these wires to allow growth there along. When the plants are still in the early stage of growing, the support cable is suspended at a low level. During growth the cable is regularly hoisted corresponding to the growth of the plants, until a maximum is reached, typically between 2 and 2.5 meters above ground level, so about 1 and 1.5 meters above the growth gutters. Typically the cable is suspended using chains that hang down from the top frame in the green house. Chains combine strength and ease of winding to allow hoisting while at the same time being strong. Typically, chains are provided at intervals of 8 to 10 meters. The document NL 1 028 170 C2 discloses a greenhouse equipped with such a growing system.

Once the plants do no longer produce the required number, amount and/or quality of crops, they are removed from the green house. Typically the plants are cut by the last person to pick the crops at the bottom, just above the gutter. Then the plants are left to dry for a couple of hours. After that the wires are cut adjacent the support cable and the pieces of wire, together with the plants grown over them are collected and discarded. This cutting and collecting is done manually and is therefore very labour intensive. The reason for the need of manual cutting in particular is clear: the position of the cable and hence of the sites at which the wires are to be cut does not only vary along the length of the cable (the highest point being at the site where the cable is connected to the chains, the lowest point being in between two of these suspender chains), but also varies in time during the cutting process itself. By cutting the wires namely the mass hanging on the cables will change and therefore the height of the cable will change. Also, the cutting process gives rise to pulling forces that may change the local position of the cable. As such, the exact location in space where a wire needs to be cut cannot be determined beforehand, but depends on the process itself.

Visual means to automatically detect the exact location of the next wire to be cut have been assessed but found to be unreliable given the fact that the environment is very rich in dust and also, by the fact that the wires and cable may be grown over with the plants and thus are very hard to unambiguously locate.

An alternative solution to allow automatic cutting of the wires would be to rigidly set the form of the cable right before cutting the wires such that each location where a wire needs to be cut is unambiguously known. Such rigid setting could be provided for by pushing the cable at each location to its lowermost position and at the same time fixing its lateral position. This can be done but requires a very complicated set up of multiple rigid pushing elements positioned at small intervals. Economically this is not viable when compared to manual cutting. Pushing the cable upwardly to fix its position is not an option since the cable due to its suspension by chains would then be pushed against the top framework of the green house. Also, when the cable is in that position, the suspenders will hang down in a loop from the top framework alongside the cable and interfere with the cutting action.

Given the above, in the art the wires are cut by human operators which simply grasp each wire to be cut and cut it typically 10 centimeters below its connection (typically a knot) with the cable. This leaves a piece of the wire still connected to the cable which enables easy connection of a new clean wire for the next generation of growing crop plants.

### Object of the invention

It is an object of the invention to devise a method and apparatus that allows the wires to be cut from the support cable substantially automatically.

### Summary of the invention

To meet the object of the invention, a method as introduced in the *Field of the invention* section here above has been devised, according to claim 1, the method comprising providing a pushing element that pushes the cable in upwards direction, providing a cutting element that has a fixed spatial relationship with regard the pushing element, moving the pushing element in conjunction with the cutting element along the cable while cutting the multiple separate wires, wherein the upwards movement of the cable by the pushing element is limited such that when the pushing element passes a suspender, the lowermost point of this suspender is at a vertical position above the cutting element.

Applicant recognized that in contrast with the common perception that the position of the cable needs to be rigidly fixed in order to automate the wire cutting procedure, it is sufficient to push the cable in upwards direction over a limited distance, as long as the cutting element has a fixed spatial relationship with the pushing element. This can be understood as follows: by pushing the cable in upwards direction, the cable will take a fixed (vertical) position with regard to the pushing element. Because of the tension in the cable namely, and the weight of the load hanging down from the cable, the cable tends to remain in contact with the pushing element, even when the upwards movement of the cable is over a small distance only. By providing a cutting element that on its turn has a fixed spatial relationship with the pushing element, the position of the cutting element with regard to the cable, at least near the pushing element is also fixed. So, when the pushing element moves along the cable, the cutting element has at each position a fixed spatial relation with regard to the cable and thus with regard to the wires to be cut. The further gist of the invention now lies in the recognition that the upwards movement should be limited. If the upwards movement namely is not limited, the suspenders would form a loop which hangs down along the cable and interferes with the cutting element. By limiting the upwards movement such that when the pushing element passes a suspender, the lowermost point of this suspender (even when looped slightly) is at a vertical position above the cutting element. This way, a situation wherein the cable is pushed too far upwardly, such that the suspenders form a (big) loop and in effect block the cutting of the wires, can be prevented. During all this time, the pushing element remains substantially in contact with the cable, that is, at the site where the pushing element pushes against the cable, *viz*. near the next wire to be cut. Since the cutting element has a fixed spatial relationship with the pushing element, its position with respect to the cable and thus the next wire to be cut is also fixed. This allows automatic cutting of the wire, and due to the limited upwards movement, prevents interference of the suspenders with the cutting action.

So even without actually fixing the location at which the next wire is cut (this location may still vary in space considerably), the present invention provides that the pushing element remains in essence in contact with the cable, no matter whether the cable tends to move downwardly or upwardly by a varying tension due to a varying load of plants, the cutting action itself or any other reason, while at the same time preventing that the cable is pushed too far upwardly. Having the contact between the pushing element and the cable adjacent the next wire to be cut in place, the position of the cutting element with respect to that wire can also be fixed by making sure the pushing element and the cutting element have a fixed spatial relationship.

In practice indeed, the cable may bounce and vary its height considerably during the cutting process, but the pushing element makes sure, by remaining substantially in contact with the cable, that the cutting element and the next wire to be cut have a substantial fixed spatial relationship allowing automatic cutting.

The limitation in the upwards movement of the pushing element depends inter alia on the type of cable and type of suspenders. In general, the limitation should be such that the cable at a site where it is suspended from the top framework will be pushed upwardly such that the loop the suspender forms does not hinder the automatic cutting of the wire. In other words: the bottom of the loop must remain above the height where the cutting element is. If not, the risk is run that a suspender is cut by the cutting element or that the cutting element is damaged by hitting the suspender. Such a limitation can be established easily using routine skills.

The invention also pertains to an apparatus according to claim 9, wherein the apparatus comprises a frame, and connected to that frame a first pushing element for pushing the cable in upwards direction, the apparatus comprising a limiting means for limiting the distance by which the cable is pushed upwardly by the pushing element, and a cutting element for cutting the wires, wherein the pushing element and the cutting element having a fixed spatial relationship.

### Definitions

A *cable* is a heavy rope or wire line used for support.

To *cut* is to separate into parts with or as if with a sharp-edged instrument.

To *suspend* is to hang so as to allow free movement.

A *suspender* is a non-rigid element that suspends something else. Typical suspenders are a chain, cord, strap etc.

*Interdistant* means positioned at a distance.

*Adjacent* means near, for example contiguous with.

A *fixed spatial relationship* between two elements means the elements remain in essence at the same distance from each other and when they move, they move in essence as a unitary construction. A fixed spatial relationship does not preclude however that the elements may take varying orientations with respect to each other. As an example, the legs of a pair of pliers have a fixed spatial relationship in the sense of the present invention.

*Automatically* means without operator intervention. Automatically does not preclude that the process is initiated or stopped by an operator.

### Embodiments

In an embodiment the upwards movement of the cable by the pushing element is limited by using a pushing force that does not exceed a predetermined maximum force. Applicant found that for limiting the distance over which the cable us pushed upwardly in line with the invention it is sufficient to exert a maximized force to the cable in upwards direction adjacent a wire to be cut. This can be understood as follows: when the force exerted is higher than the force the cable exerts back on the pushing element the pushing element will move the cable in upwards direction. The consequence of this upward movement is that the force exerted by the cable on the pushing element will increase. This movement will stop as soon as both forces are in equilibrium. This way, the upwards movement is limited per se. By a simple trial and error process, a maximum force can be found wherein the cable is pushed not too far upwardly (such that the suspenders will not interfere with the cutting action) and still the required contact between the pushing element and the cable can be assured. It is noted that in this embodiment a unit that comprises the unit "Force" such as momentum (Force x arm) or pressure (Force per square unit) could be used to control in effect the pushing force. This is all understood to be covered by the terms "maximum force".

In a further embodiment the force is above a predetermined minimum force. With a predetermined minimum force, the chance that the cable will bounce away from the pushing element can be decreased substantially. This way, it can be prevented that different wires are cut at different vertical positions. Also, the reliability of the method is further increased since contact between the pushing element and the cable can be maintained virtually continuously (at least from a practical point of view this is: small bouncing away namely does not negatively influence the cutting reliability). The required minimum force depends nt only on the type of cable (its stiffness) and the typical load of the cable, but also on the needed evenness of length of cut wires that remain connected to the cable. When the requirement for example is very strict (all wire ends must for example be between 10 en 11 cm), and the cable at the same time is very flexible, the plant load per wire is very high and the crop wires are hard to cut (which together may increase the chance that the cable various considerably in height during the cutting process), the required minimum force may be set at a relatively high level.

In yet another embodiment the force is imposed using a lever having on one end of its fulcrum the pushing element and on the other end a fixed weight, i.e. an object used principally to exert a force by virtue of its gravitational attraction to Earth. The use of a lever and a fixed weight has proven to be a very simple and effective way of imposing a predetermined maximum force and also enables to set a predetermined minimum force in line with the present invention.

In still another embodiment the cable is additionally pushed in lateral direction before the multiple separate wires are cut. This embodiment is found to be of particular advantage in order to make sure the loops that are formed by the suspenders when the cable is pushed upwardly pose no problem for the automatic cutting of the wires. Applicant recognised that when pushing the support cable laterally, even when the cable at the same time is pushed upwardly over a considerable distance, the suspender will not form a deeply hanging loop that may hinder the cutting element's action. Moreover, by pushing the cable laterally the tension in the cable will increase and the risk of the cable bouncing away from the pushing element has found to be significantly decreased, even when the upwards movement is very limited. This also has the implication that the upwards movement of the cable may be for example as little as a few millimetres to still provide for an adequate contact between the pushing element and the cable. Yet another advantage is that the wires to be cut no longer are positioned right above the growth gutter. Collection of the cut wires therefore becomes easier, simply because the gutter does not need to be a spatially hindering object anymore. In a further embodiment the wires after being cut from the cable are collected in a container having an open top, the cable being pushed in lateral direction such that the wires to be cut are substantially positioned above the open top of the container. This way, the cut wires simply fall in the container as soon as they are cut from the support cable.

In even a further embodiment two cables that extend in essence parallel are pushed in lateral direction towards each other. This embodiment corresponds to a typical practical situation wherein two gutter extend virtually parallel, each having a support cable and crop wires hanging above them, an aisle being present between the two gutters. IN this embodiment an apparatus for performing the method travels through the aisle, and the two cables above the two gutters along that aisle are pushed laterally to reach a position above the apparatus. In case the apparatus comprises both the cutting means and an open container, the cut wires of both cables can be collected simultaneously in the container. In a preferred embodiment for each cable a separate pushing element in conjunction with a corresponding cutting element is used.

In an embodiment of the apparatus according to the invention the limiting means comprise a lever having a first end and a second end, and between those ends a fulcrum connected to the frame, the pushing element being connected to the lever at the first end and a fixed weight being connected at the second end.

In another embodiment the apparatus further comprises a second pushing element connected to the frame for pushing the first cable in lateral direction. In a further embodiment the frame is in operative connection with a container that has an open top, and the second pushing element is positioned such that a cable can be forced to take a lateral position above the open top of the container.

In yet another embodiment the frame comprises a third pushing element, such that a second cable can be pushed laterally towards the first cable in a direction opposite to the direction in which the first cable is pushed.

The advantages of these other embodiments have been explained *supra* in relation to the method according to the invention.

In still another embodiment of the apparatus according to the invention, the first pushing element and cutting element are movable in horizontal direction with respect to the container. This way, the cutting element can take a position with regard to the container that corresponds to the location the cut wires should take in the container. For example, when the back part of the container is already filled with cut wires and the corresponding plants grown over them, the cutting element should be positioned to be above a part of the container that is not yet (completely) filled. Advantageously, the apparatus comprises a controlling means to control the position of the first pushing element and the cutting element with respect to the container on the basis of the amount of cut wires grown over with plants present in the container. Such a controlling means could for example be a means that is based on optic sensors, or contact sensors. Alternatively, at the bottom of the container, extending in longitudinal direction, two toothed belts are arranged at both sides of the container, which belts continuously compress the cut wires with plants to the back of the container. When the container gets fuller and fuller, the force needed to keep the belts running through the mass of wires and plants increases. Such a force could for example be measured by determining the current needed to drive the belt motors. The higher the force needed to compress the mass of wires and plants, the more the cutting element should be arranged to the front of the container.

In an embodiment the container is provided with a door to remove cut wires grown over with plants present in the container, wherein the bottom of the container is automatically moveable towards the door. For example, the bottom of the container may be constituted as a conveyer belt for this purpose. It is advantageous to have the door at that side of the container against which the cut wires are compressed upon filling of the container, that is, if such compression takes place.

In an embodiment the first pushing element is constituted as a roll land the cutting element is constituted as a rotating disc. A roll has the advantage that in general it will not damage the cable, even when a considerable pushing force is exerted. By having a roll of substantial width, for example 15 to 20 cm, the chance that the cable will lose contact with the pushing element due to lateral travel can be made minimal or even zero. A rotating disc as a cutting element has the advantage that little force is exerted on the cable due to the cutting action.

In an embodiment the second pushing element, and if applicable the third pushing element, is constituted as a roll for the same reasons as mentioned here above for the first pushing element.

The invention will now be further explained using the following figures that describe particular embodiments of the invention

### Examples

Figure 1 schematically shows a greenhouse provided with a crop wire hoisting system.
Figure 2 schematically shows details of the crop wire hoisting system of figure 1.
Figure 3 schematically shows the pushing action of a pushing element for use in the present invention.
Figure 4 schematically shows the pushing element of figure 3 in conjunction with the cutting element, in spatial relation with a crop wire to be cut.
Figure 5 schematically shows technical details of a limiting means for limiting the upward movement of a pushing element.
Figure 6 schematically shows an apparatus according to the invention.
Figure 7 schematically shows the effect of lateral movement of the support cable.
Figure 8 schematically shows a rear view of parts of the apparatus according to the invention.
Figure 9 schematically shows a top view of parts of the apparatus as shown in figure 8.

### Figure 1

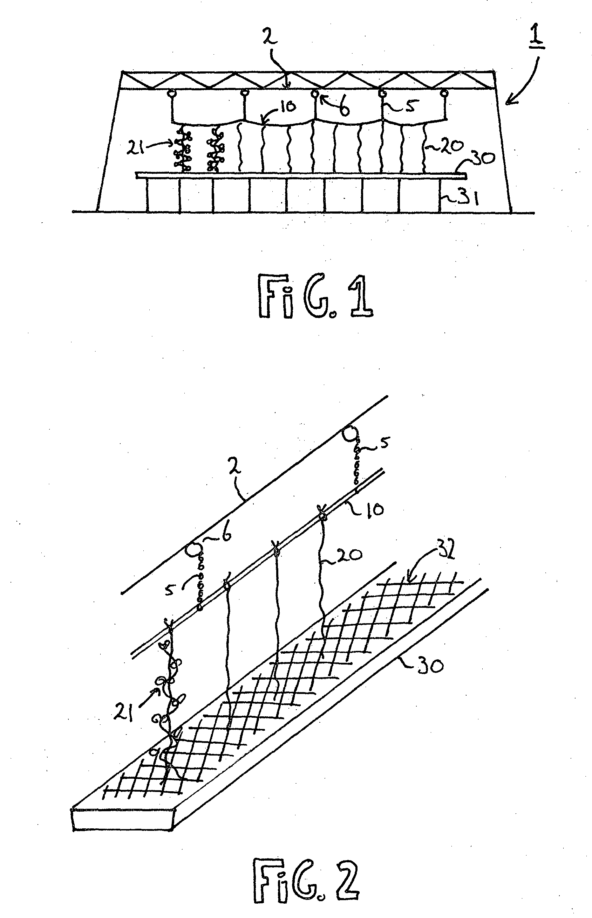

Figure 1 schematically shows a greenhouse 1 provided with a crop wire hoisting system. The greenhouse is provided with a top framework 2, to which framework a support cable 10 is hoistable suspended. For this, the top framework is provided with multiple separate suspenders 5, in this case common chains, that can be pulled in using winding means 6 that comprise sprockets to grasp the chains. Underneath the cable 10, growth gutter 30 is depicted, which gutter rests on multiple supporting standards 31. The gutter is provided with a substrate (see figure 2) in which plants 21 are rooted (only two plants to the left hand side are depicted). The plants are grown over crop wires 20 that are connected to support cable 10 at predetermined, in this case regular, intervals. The cable 10 is regularly hoisted to correspond to the growing of the plants. Such a system is commonly known in the art.

### Figure 2

Figure 2 schematically shows details of the crop wire hoisting system of figure 1. In this view, the substrate 32 that is present in the gutter 30 can be seen. The plants 21 (of which only the left most one is depicted for clarity purposes) root in this substrate. The plants grow over wires 20 towards the support cable 10. By pulling in the chains 5, the cable 10 can be hoisted.

### Figure 3

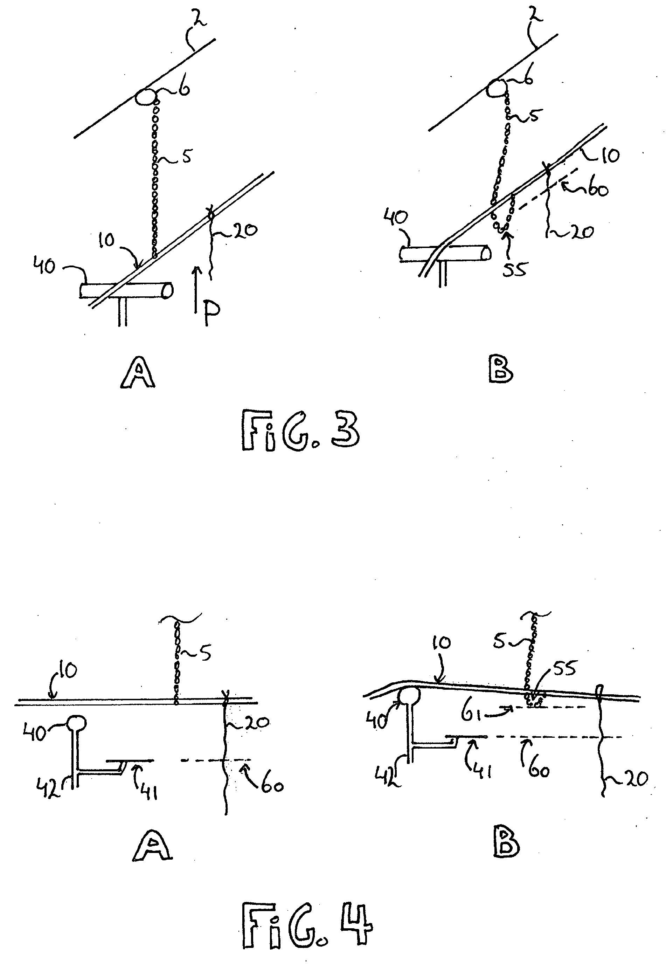

Figure 3 schematically shows the pushing action of a pushing element 40 for use in the present invention. In the left hand figure 3A, pushing element 40 is in a position just below support cable 10. Suspender chain 5 is also depicted in fully stretched form. The next wire to be cut is wire 20. Pushing element 20 will move in the direction indicated with a capital P. For explanatory reasons, in figure 3B a situation is depicted wherein the upward movement of pushing element 40 is further than according to an adequate limitation in line with the invention. Due to this too far upward movement, chain 5 forms a loop 55 such that the lowermost point of this chain, i.e. the lowermost point of the loop 55 is below the cutting action height 60 of the cutting element (not shown in figure 3, see figure 4). As such, the chain 5 (via its loop 55) thus interferes with the cutting action of the cutting element.

### Figure 4

Figure 4 schematically shows the pushing element of figure 3 in conjunction with the cutting element 41, in spatial relation with a crop wire 20 to be cut, in line with the present invention. Figure 4A is in fact a side view of the same configuration as depicted in figure 3A. In this view however, cutting element 41, in this embodiment a rotating sharp disc, is depicted. This cutting element 41 has a fixed spatial relationship with pushing element 40, given the rigid connecting element 42. Figure 4B is a side view that corresponds to the situation in figure 3B, but in this case with an upward movement of the pushing element 40 in line with the invention. As can be seen, the upward movement is such that the cable 10 under its tension is more or less fixed with regard to the pushing element 40 (it is noted that the actual upward movement in practice is less then as shown in figure 4B; the higher upward movement in figure 4B is exaggerated for explanatory reasons). The limited upward movement makes sure that the lowermost point of the chain 5, i.e. the lowermost point of loop 55 is at a height 61. This height 61 is substantially above cutting action height 60. As such, a forward movement of cutting element 41 is not hindered by the presence of the chain 5, despite this chain being looped due to the upward movement of the cable 10.

### Figure 5

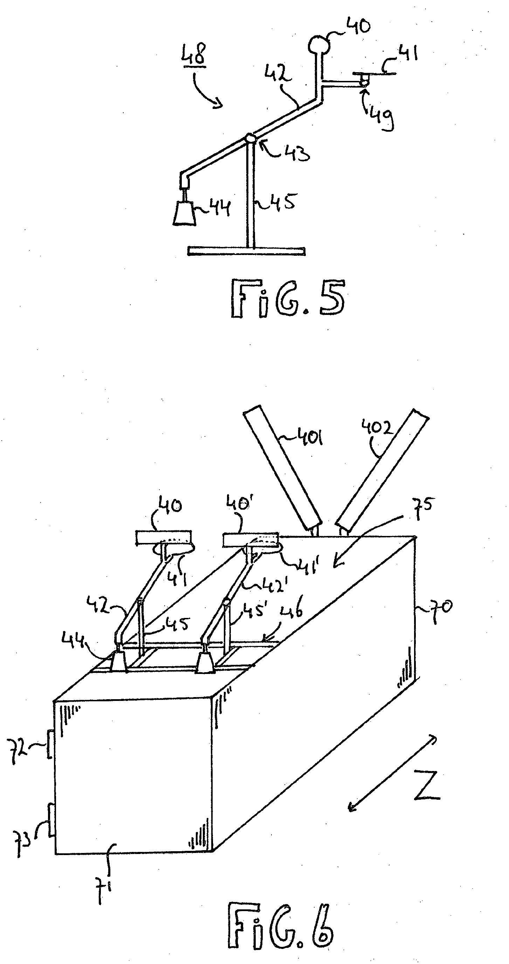

Figure 5 schematically shows technical details of a limiting means 48 for limiting the upward movement of the pushing element 40. In this embodiment the upwards movement of the cable (not shown) by the pushing element 40 is limited by using a pushing force that does not exceed a predetermined maximum force. This is provided for by using a lever 42 having a first end to which the pushing element 40 is connected and a second end to which a fixed weight 44 is being connected. In between those ends a fulcrum 43 is connected to the frame 45. The fixed weight provides for a constant force that induces a momentum to rotate the lever and moves the pushing element 40 upwardly. On the one hand, thus movement is limited by the length of the lever 42. On the other hand, the movement will be limited by the reaction forces of a cable being pushed upwardly by the pushing element 40. The limiting means 48 also comprises a hinge 49. This hinge is to provide in essence a horizontal positioning of the cutting blade 41, whatever the position is lever 42 takes with respect to the frame 45.

### Figure 6

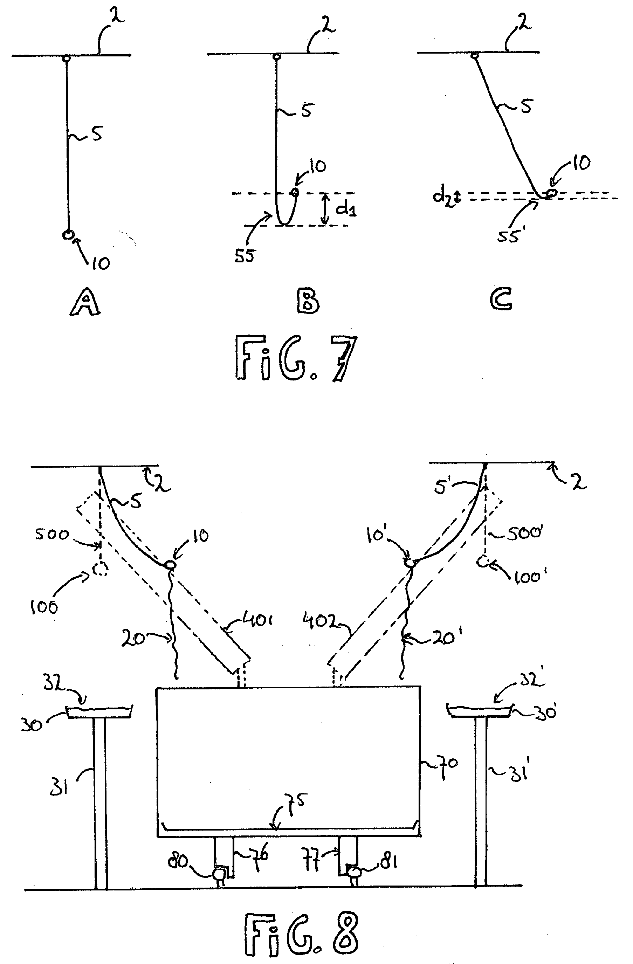

Figure 6 schematically shows an apparatus according to the invention. The main component 70 of this apparatus is a container having an open top 75. This container serves as a main frame for the apparatus. On top of the side walls of the container a trolley 46 is positioned, which trolley carries two pushing and cutting elements of the same constitution as the one depicted in figure 5. The trolley 46 can be moved in the indicated (horizontal) direction Z with respect to the container 70. At the back, the container has a door 71, hinged with hinges 72 and 73. This door can be opened to remove the cut wires with plants from the open container. At the front, the apparatus is provided with pushing elements 401 and 402 which are positioned such that they can exert a lateral pushing force on support cables (not shown in figure 6, see figure 8). In an alternative embodiment, these pushing elements 401 and 402 are connected to the trolley 46 and are able to move in conjunction with the pushing and cutting elements.

### Figure 7

Figure 7 schematically shows the effect of lateral movement of the support cable 10. In figure 7A, the chain 5 is depicted when the cable 10 simply hangs down from the top framework 2 in the green house. In figure 7B, it is indicated that the chain 5 forms a considerable loop 55 when the cable is pushed upwardly by a pushing element (not shown). This loop causes that a cutting element (not shown) has to stay more than a distance d1 away from the cable 10 to cut a wire. This may not be a problem, but limits the freedom of action since in such case, each wire cut will leave a connected piece to the cable having a length of at least d1. In figure 7C, a situation is depicted wherein the cable 10 is pushed upwardly over the same distance as in figure 7B, but at the same time is pushed laterally. Since the chain 5 now has to bridge a longer distance between the top framework 2 and the cable 10, the loop 55' is significantly smaller than in the situation of figure 7B. This leads to the result that the cutting means need only be at least a distance d2 below cable 10 which gives more freedom to operate.

### Figure 8

Figure 8 schematically shows a cross section rear view of some parts of the apparatus according to the invention (the pushing and cutting elements as well as their carrying frame 45 and trolley 46 have been left out of this view for matters of clarity). In this schematic drawing, one can see the effect the lateral pushing elements 401 and 402 have that are positioned (in this embodiment) on the front of the apparatus. The original positions of the cables 10 and 10', indicated as 100 and 100', are above the corresponding gutters 30 and 30'. The chains 5 and 5' in that original position take the dotted lines 500 and 500' down from the top frame work 2. The pushing elements 401 and 402 push these cables inwardly to reach the position indicated in figure 8. In this position the advantages as explained in relation with figure 7 are provided. Next to tis, the cables now take a position above the open top 75 of container 70. When the wires 20 and 20' are cut from the cable, they simply fall into container 70 and thus are automatically collected together with the plants grown over them (not shown in figure 8).

In this figure, it can be seen that the container 70 uses tubings 80 and 81 for transport between the growth gutters 30 and 30'. Such tubing is commonly present in a green house for heating purposes. In order to provide for a proper guidance, the container is provided with wheels 76 and 77. In this view it can also be seen that the bottom of the container 70 is provided with a transport belt-like flooring 75. This flooring can be moved towards door 71 (see figure 6) to automatically throw out the contents of the container when needed.

### Figure 9

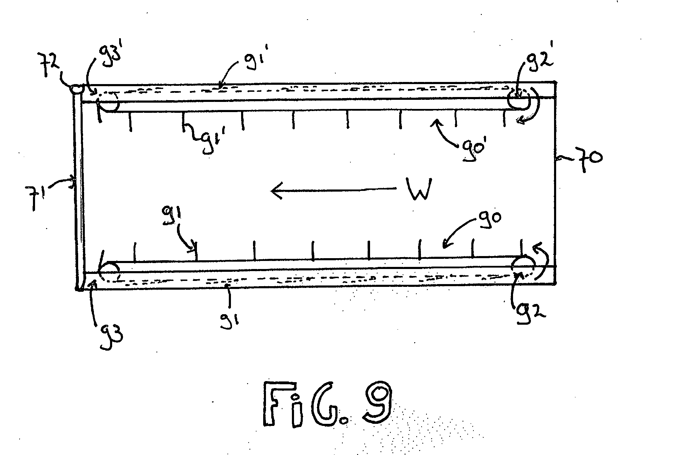

Figure 9 schematically shows a top view of parts of the apparatus as shown in figure 8. In this top view it can be seen that near the bottom of the container, there are provided two toothed belts 90 and 90', each on one side of the container 70. These belts are driven by electric motors 92 and 92' in the direction W indicated. This way, the cut wires grown over with plants that fall into the container are pushed towards the back door 71. The teeth 91 and 91' hinge towards the belt to enable return of the belt through hollow wall portions 93 and 93' respectively. As indicated using dashed lines, the teeth 91 and 91' are forced to take a position almost parallel to the belts 90 and 90' respectively when traveling through the hollow wall portions 93 and 93'.

Depending on the amount of material present in the container, the motors 92 and 92' will need to work harder in order to get the belts 90 and 90' rotated through the mass of wires and plants. This "harder work" needs a higher current to the motors. This current is used as a controlling means to control the position trolley 46 takes with respect to the container as indicated in figure 6. A low current means that the container is hardly filled and thus the trolley needs to be in the position as indicated in figure 6, near the trailing end of the container. The higher the current, the more the container is filled and the further the trolley will move towards the front end of the container.

## Claims

1. A method to cut multiple separate wires (20) that hang down from a support (10) in a crop wire hoisting system, which system comprises as the support a hoistable cable (10) that extends in essence horizontally and is suspended from a top framework (2) by being connected to multiple interdistant suspenders (5) that can be pulled in towards the top framework to allow hoisting of the cable, the multiple separate wires being connected to the cable at predetermined intervals and each grown over with a plant (21), the method comprising:
- providing a pushing element (40) that pushes the cable in upwards direction,
- providing a cutting element (41) that has a fixed spatial relationship with regard the pushing element,
- moving the pushing element in conjunction with the cutting element along the cable while cutting the multiple separate wires,
wherein the upwards movement of the cable by the pushing element is limited such that when the pushing element passes a suspender, the lowermost point of this suspender is at a vertical position above the cutting element.

2. A method according to claim 1, wherein the upwards movement of the cable by the pushing element is limited by using a pushing force that does not exceed a predetermined maximum force.

3. A method according to claim 2, wherein the pushing force is above a predetermined minimum force.

4. A method according to any of the claims 2 or 3, wherein the pushing force is imposed using a lever (42) having on one end of its fulcrum (43) the pushing element and on the other end a fixed weight (44).

5. A method according to any of the preceding claims, wherein the cable is additionally pushed in lateral direction before the multiple separate wires are cut.

6. A method according to claim 5, wherein the wires after being cut from the cable are collected in a container (70) having an open top (75), the cable being pushed in lateral direction such that the wires to be cut are substantially positioned above the open top of the container.

7. A method according to any of the claims 5 or 6, wherein two cables that extend in essence parallel are pushed in lateral direction towards each other.

8. A method according to claim 7, wherein for each cable a separate pushing element in conjunction with a corresponding cutting element is used.

9. An apparatus for automatically cutting multiple separate crop wires (20) which are in hanging connection with an in essence horizontally extending first support cable (10), wherein each wire is grown over with a plant (21), the apparatus comprising a frame (70), and connected to that frame:
- a first pushing element (40) for pushing the cable in upwards direction, the apparatus comprising a limiting means (48) for limiting the distance by which the cable is pushed upwardly by the pushing element,
- a cutting element (41) for cutting the wires,
- the pushing element and the cutting element having a fixed spatial relationship.

10. An apparatus according to claim 9, wherein the limiting means comprise a lever (42) having a first end and a second end, and between those ends a fulcrum (43) connected to the frame, the pushing element being connected to the lever at the first end and a fixed weight (44) being connected at the second end.

11. An apparatus according to claim 9 or 10, the apparatus further comprising a second pushing element (401) connected to the frame for pushing the first cable in lateral direction.

12. An apparatus according to claim 11 wherein the frame is in operative connection with a container that has an open top (75), and the second pushing element is positioned such that the first cable can be forced to take a lateral position above the open top of the container.

13. An apparatus according to claim 11 or 12, wherein the frame comprises a third pushing element (402), such that a second cable (10') can be pushed laterally towards the first cable in a direction opposite to the direction in which the first cable is pushed.

14. An apparatus according to claim 12 or 13, wherein the first pushing element and cutting element are movable in horizontal direction with respect to the container.

15. An apparatus according to claim 14, wherein the apparatus comprises a controlling means (90, 91, 92) to control the position of the first pushing element and the cutting element with respect to the container on the basis of the amount of cut wires grown over with plants present in the container.

## Patentansprüche

1. Verfahren zum Abschneiden von mehreren separaten Drähten (20), die von einer Stütze (10) in einem Pflanzendrahthochzugssystem herunterhängen, wobei das System als die Stütze ein hochziehbares Kabel (10) umfasst, das im Wesentlichen horizontal verläuft und an einem oberen Rahmen (2) durch Verbindung mit mehreren beabstandeten Hängern (5) aufgehängt ist, die zum oberen Rahmen hin eingezogen werden können, um das Hochziehen des Kabels zu ermöglichen, wobei die mehreren separaten Drähte an vorgegebenen Intervallen mit dem Kabel verbunden sind und jeder mit einer Pflanze (21) überwachsen ist, das Verfahren umfassend:
- Vorsehen eines Schubelements (40), das das Kabel in die Aufwärtsrichtung schiebt,
- Vorsehen eines Schneidelements (41), das eine festgelegte räumliche Beziehung bezüglich des Schubelements aufweist,
- Bewegen des Schubelements zusammen mit dem Schneidelement das Kabel entlang, während die mehreren separaten Drähte abgeschnitten werden,
wobei die Aufwärtsbewegung des Kabels durch das Schubelement begrenzt ist, sodass sich, wenn das Schubelement einen Hänger passiert, der unterste Punkt dieses Hängers an einer vertikalen Position über dem Schneidelement befindet.

2. Verfahren nach Anspruch 1, wobei die Aufwärtsbewegung des Kabels durch das Schubelement durch Anwenden einer Schubkraft begrenzt ist, die eine vorgegebene Maximalkraft nicht übersteigt.

3. Verfahren nach Anspruch 2, wobei die Schubkraft über einer vorgegebenen Minimalkraft liegt.

4. Verfahren nach einem der Ansprüche 2 oder 3, wobei die Schubkraft unter Benutzung eines Hebels (42) ausgeübt wird, der an einem Ende seines Hebelpunkts (43) das Schubelement und am anderen Ende ein festgelegtes Gewicht (44) aufweist.

5. Verfahren nach einem der vorhergehenden Ansprüche, wobei das Kabel zusätzlich in einer Seitenrichtung geschoben wird, bevor die mehreren separaten Drähte abgeschnitten werden.

6. Verfahren nach Anspruch 5, wobei die Drähte, nachdem sie vom Kabel abgeschnitten wurden, in einem Behälter (70) mit einer offenen Oberseite (75) gesammelt werden, wobei das Kabel derart in Seitenrichtung geschoben wird, dass die Drähte, die abgeschnitten werden sollen, im Wesentlichen über der offenen Oberseite des Behälters angeordnet sind.

7. Verfahren nach einem der Ansprüche 5 oder 6, wobei zwei Kabel, die im Wesentlichen parallel verlaufen, in Seitenrichtung zueinander hin geschoben werden.

8. Verfahren nach Anspruch 7, wobei für jedes Kabel ein separates Schubelement zusammen mit einem entsprechenden Schneidelement benutzt wird.

9. Vorrichtung zum automatischen Abschneiden von mehreren separaten Pflanzendrähten (20), die sich in Hängeverbindung mit einem im Wesentlichen horizontal verlaufendem ersten Stützkabel (10) befinden, wobei jeder Draht mit einer Pflanze (21) überwachsen ist, wobei die Vorrichtung einen Rahmen (70) und verbunden mit dem Rahmen Folgendes umfasst:
- ein erstes Schubelement (40) zum Schieben des Kabels in der Aufwärtsrichtung, wobei die Vorrichtung Begrenzungsmittel (48) zum Begrenzen der Distanz umfasst, um die das Kabel durch das Schubelement nach oben geschoben wird,
- ein Schneidelement (41) zum Schneiden der Drähte,
- wobei das Schubelement und das Schneidelement eine festgelegte räumliche Beziehung aufweisen.

10. Vorrichtung nach Anspruch 9, wobei die Begrenzungsmittel einen Hebel (42) umfassen, der ein erstes Ende und ein zweites Ende und zwischen diesen Enden einen Hebelpunkt (43) aufweist, der mit dem Rahmen verbunden ist, wobei das Schubelement mit dem Hebel am ersten Ende verbunden ist und ein festgelegtes Gewicht (44) am zweiten Ende verbunden ist.

11. Vorrichtung nach einem der Ansprüche 9 oder 10, wobei die Vorrichtung ferner ein zweites Schubelement (401), das mit dem Rahmen verbunden ist, zum Schieben des ersten Kabels in Seitenrichtung umfasst.

12. Vorrichtung nach Anspruch 11, wobei der Rahmen in betriebsfähiger Verbindung mit einem Behälter steht, der eine offene Oberseite (75) aufweist, und wobei das zweite Schubelement derart angeordnet ist, dass das erste Kabel zum Einnehmen einer Seitenposition über der offenen Oberseite des Behälters gedrängt werden kann.

13. Vorrichtung nach einem der Ansprüche 11 oder 12, wobei der Rahmen ein drittes Schubelement (402) umfasst, sodass ein zweites Kabel (10') seitlich zum ersten Kabel hin in einer Gegenrichtung zur Richtung, in der das erste Kabel geschoben wird, geschoben werden kann.

14. Vorrichtung nach einem der Ansprüche 12 oder 13, wobei das erste Schubelement und das Schneidelement in horizontaler Richtung in Bezug zueinander beweglich sind.

15. Vorrichtung nach Anspruch 14, wobei die Vorrichtung ein Steuermittel (90, 91, 92) zum Steuern der Position des ersten Schubelements und des Schneidelements bezüglich des Behälters auf der Grundlage der Menge von abgeschnittenen, mit Pflanzen überwachsenen Drähten, die im Behälter vorhanden ist, umfasst.

## Revendications

1. Procédé de coupe de broches séparées multiples (20) qui sont suspendues à un support (10) d'un système de palan de broches de culture, lequel système comprend en tant que support, un câble pouvant être hissé (10) qui s'étend essentiellement horizontalement et est suspendu à un châssis supérieur (2) en étant relié à des suspensoirs interdistants multiples (5) qui peuvent être tirés en direction du châssis supérieur pour permettre le hissage du câble, les broches séparées multiples étant reliées au câble à intervalles prédéterminés et ayant chacune une plante (21) ayant poussé dessus, le procédé comprenant :
- la fourniture d'un élément de poussée (40) qui pousse le câble vers le haut,
- la fourniture d'un élément de coupe (41) qui est en relation spatiale fixe par rapport à l'élément de poussée,
- le déplacement de l'élément de poussée conjointement à l'élément de coupe le long du câble tout en coupant les broches séparées multiples,
sachant que le mouvement ascendant du câble par l'élément de poussée est limité de telle façon que lorsque l'élément de poussée dépasse un suspensoir, le point le plus bas de ce suspensoir est en position verticale au-dessus de l'élément de coupe.

2. Procédé selon la revendication 1, dans lequel le mouvement ascendant du câble par l'élément de poussée est limité par l'utilisation d'une force de poussée qui n'excède pas une force maximale prédéterminée.

3. Procédé selon la revendication 2, dans lequel la force de poussée est supérieure à une force minimale prédéterminée.

4. Procédé selon la revendication 2 ou 3, dans lequel la force de poussée est imposée à l'aide d'un levier (42) présentant l'élément de poussée à une extrémité de son centre de rotation (43) et un poids fixe (44) à son autre extrémité.

5. Procédé selon l'une quelconque des revendications précédentes, dans lequel le câble est en outre poussé latéralement avant que les broches séparées multiples ne soient coupées.

6. Procédé selon la revendication 5, dans lequel les broches, après avoir être coupées du câble, sont collectées dans un récipient (70) présentant un dessus ouvert (75), le câble étant poussé latéralement de telle sorte que les broches à couper sont essentiellement positionnées au-dessus du dessus ouvert du récipient.

7. Procédé selon la revendication 5 ou 6, dans lequel deux câbles qui s'étendent essentiellement parallèlement sont poussés latéralement l'un vers l'autre.

8. Procédé selon la revendication 7, dans lequel un élément de poussée séparé est utilisé conjointement avec un élément de coupe correspondant pour chaque câble.

9. Appareil pour couper automatiquement des broches séparées multiples (20) qui sont en relation suspendue à un premier câble de support (10) s'étendant essentiellement horizontalement, dans lequel chaque broche a une plante (21) ayant poussé dessus, l'appareil comprenant un châssis (70) et, relié à ce châssis :
- un premier élément de poussée (40) pour pousser le câble vers le haut, l'appareil comprenant un moyen de limitation (48) pour limiter la distance dont le câble est poussé vers le haut par l'élément de poussée,
- un élément de coupe (41) pour couper les broches,
- l'élément de poussée et l'élément de coupe présentant une relation spatiale fixe.

10. Appareil selon la revendication 9, dans lequel le moyen de limitation comprend un levier (42) présentant des première et seconde extrémités, et entre ces extrémités, un centre de rotation (43) relié au châssis, l'élément de poussée étant relié au levier sur la première extrémité et un poids fixe (44) étant relié sur la seconde extrémité.

11. Appareil selon la revendication 9 ou 10, l'appareil comprenant en outre un deuxième élément de poussée (401) relié au châssis pour pousser le premier câble latéralement.

12. Appareil selon la revendication 11, dans lequel le châssis est en liaison opérationnelle avec un récipient qui présente un dessus ouvert (75), et le deuxième élément de poussée est positionné de telle façon que le premier câble peut être forcé à adopter une position latérale au-dessus du dessus ouvert du récipient.

13. Appareil selon la revendication 11 ou 12, dans lequel le châssis comprend un troisième élément de poussée (402), de telle façon qu'un second câble (10') peut être poussé latéralement en direction du premier câble dans une direction opposée à la direction dans laquelle le premier câble est poussé.

14. Appareil selon la revendication 12 ou 13, dans lequel le premier élément de poussée et l'élément de coupe sont mobiles dans le sens horizontal par rapport au récipient.

15. Appareil selon la revendication 14, dans lequel l'appareil comprend un moyen de commande (90, 91, 92) pour commander la position du premier élément de poussée et de l'élément de coupe par rapport au récipient en se basant sur la quantité de broches avec une plante ayant poussé dessus coupées et présentes dans le récipient.
